# EUROPEAN PATENT APPLICATION

(11) **EP 4 124 773 A1**
(43) Date of publication of application: **01.02.2023**
(21) Application number: 21188886.2
(22) Date of filing: 30.07.2021
(51) Int. Cl.: F16F 9/346, F16F 9/512, F16F 9/46

(54) **ADJUSTABLE VALVE**

(71) Applicant: Öhlins Racing AB, 194 27 Upplands Väsby (SE)
(72) Inventor: BOLANDER, David, 194 27 Upplands Väsby (SE)
(74) Representative: AWA Sweden AB

(57) **Abstract**

An adjustable valve (100, 200, 300, 400) for a shock absorber. The adjustable valve comprising a hollow valve body (110) wherein the hollow valve body comprises a plurality of valve apertures (160, 170, 180). The adjustable valve according to the first aspect further comprises a rotatable sleeve (140) rotatably arranged around at least part of the hollow valve body, wherein the rotatable sleeve comprises a plurality of sleeve apertures (165, 175, 185). The adjustable valve further comprises a movable spool (130) slidably arranged within the hollow valve body and configured to move relative to the hollow valve body wherein the movable spool is configured to divide the hollow valve body into a first chamber (210) and second chamber (215). Moreover, the rotation of the rotatable sleeve relative to the hollow valve body is configured to vary an alignment between at least one sleeve aperture of the plurality of sleeve apertures and at least one valve aperture of the plurality of valve apertures. Additionally, according to the first aspect the movement of the movable spool relative to the hollow valve body is configured to vary an available opening area of at least one valve aperture of the plurality of valve apertures.

## Description

### FIELD OF THE INVENTION

The present inventive concept generally relates to an adjustable valve for use in a shock absorber of a vehicle. More specifically, the present inventive concept is related to an adjustable valve for adjusting parameters a shock absorber.

### BACKGROUND OF THE INVENTION

Shock absorbers have attracted and continue to attract attention. In fact, shock absorbers represent a key component of the majority of motorized and non-motorized vehicles. From motorcycles and cars of all designs and make to mountain bikes, the function fulfilled by shock absorbers is essential to the performance of the vehicle and to its longevity. Furthermore, the development of shock absorbers has led their utilization in pneumatic and hydraulic applications to sustain different shocks or forces applied on the body of vehicles.

More particularly, there is presently an interest in the adjustment of parameters of the shock absorbers, improving their performance and the adaptability of their damping capacity to various applications. Shock absorbers known today comprise, for example, shim stack valves configured to generate adjustable resistance to the movement of the piston inside the cylinder of the shock absorber, thus adjusting the damping parameters of the shock absorber. Alternatively, the use of spool valves or adjustable bleed valves represent solutions known in the art for the adjustment of the damping parameters of shock absorbers.

However, solutions such as the ones disclosed above do not allow a wide range of adjustment of the parameters of shock absorbers. For example, shim stack valves or conventional spool valves lack the capacity to modify the damping parameters of the shock absorbers to enable varying configurations of said shock absorbers. Furthermore, adjustable bleed valves known in the art require lengthy adjustment times and also lack the capacity of providing a wide range of adjustment of the parameters of shock absorbers. Additionally, shim stack valves and spool valves known in the art generally rely solely on threshold values of pressure of damping fluid for actuation and for adjustment of the parameters of shock absorbers and do not provide to the possibility of easily adjusting said threshold values of actuation. The variety of possible adjustments is therefore very limited and the prior art solutions also do not provide a considerable control of the adjustment of the parameters of shock absorbers.

Hence, it is an object of the present inventive concept to try to overcome at least some of the deficiencies of present shock absorbers in terms of adjustment of parameters.

### SUMMARY OF THE INVENTION

It is an object of the present disclosure to mitigate, alleviate or eliminate at least some of the above-mentioned deficiencies in the art and disadvantages singly or in combination. This and other objects are achieved by providing an adjustable valve for adjusting parameters of shock absorbers for use in vehicles, having the features in the independent claims. Preferred embodiments are defined in the dependent claims.

Therefore, according to a first aspect of the present inventive concept, there is provided an adjustable valve for a shock absorber. The adjustable valve comprising a hollow valve body wherein the hollow valve body comprises a plurality of valve apertures. The adjustable valve according to the first aspect further comprises a rotatable sleeve rotatably arranged around at least part of the hollow valve body, wherein the rotatable sleeve comprises a plurality of sleeve apertures. The adjustable valve further comprises a movable spool slidably arranged within the hollow valve body and configured to move relative to the hollow valve body wherein the movable spool is configured to divide the hollow valve body into a first chamber and second chamber. Moreover, the rotation of the rotatable sleeve relative to the hollow valve body is configured to vary an alignment between at least one sleeve aperture of the plurality of sleeve apertures and at least one valve aperture of the plurality of valve apertures. Additionally, according to the first aspect the movement of the movable spool relative to the hollow valve body is configured to vary an available opening area of at least one valve aperture of the plurality of valve apertures.

Thus, the present inventive concept is based on the idea of providing a valve capable of easily adjusting and controlling damping parameters of a shock absorber from a single point of adjustment, i.e. the rotatable sleeve. The present inventive concept further stems from the idea of providing a wider range of adjustment of damping parameters, in particular the enablement of high-speed damping and low-speed damping of the shock absorber. The present inventive concept therefore permits the shock absorber to be adapted to a wider range of applications in terms of impacts and forces applied on the vehicle which comprises the shock absorber with the present adjustable valve. A general aim of the present inventive concept is also to combine and control the function and effect of a bleed valve and a spool valve in order to precisely adjust the bleed rate, the damping rate and other damping parameters.

Initially, some terminology may be defined to provide clarification for the following disclosure.

By the term "damping parameters", it is here meant any parameter or property affecting the damping capacity and comportment of a shock absorber, for example its damping rate, its damping ratio, its bleed rate, etc. In the meaning of the present disclosure, the damping parameters should be understood as parameters adjustable via the adjustable valve.

By the term "damping rate" it is here meant a damping parameter of a shock absorber indicating the ratio of the force applied on the shock absorber over the velocity of displacement of the piston of the shock absorber when said force is applied. In other words, a low damping rate is an indicator of a less pronounced slope of the damping curve of the shock absorber. On the other hand, a high damping rate is an indicator of a more pronounced slope of the damping curve of the shock absorber.

By the term "high-speed damping" it is here meant an adjustment of the damping of a shock absorber which is adapted for the absorption of quick and abrupt impacts generating fast movement of the piston rod of the shock absorber. High-speed damping therefore permits the shock absorber to be adapted to high and rapid impacts. For example, high-speed damping is solicitated when the vehicle comprising the shock absorber abruptly hits an object in its path rapidly compressing said shock absorber. High-speed damping is applicable to the compression stroke and to the rebound stroke of shock absorbers, i.e. high-speed compression damping and high-speed rebound damping.

By the term "low-speed damping" it is here meant an adjustment of the damping of a shock absorber which is adapted for the absorption of forces slowly and/or gradually applied on the shock absorber generating moderate or slow movement of the piston rod of the shock absorber. For example, low-speed damping is solicitated for absorbing the weight the vehicle and controlling its movement under inertia, i.e. during acceleration and during deceleration. Similarly to high-speed damping, low-speed damping is applicable to the compression stroke and to the rebound stroke of shock absorbers, i.e. low-speed compression damping and low-speed rebound damping.

By the term "aperture" it is here meant a hole, a slit, a cutout, a gap, etc. in the body of the valve and/or the body of the sleeve, through the wall of their respective hollow bodies. In the sense of the present inventive concept, an "aperture" therefore comprises an area for which material is absent and which enables fluid connectivity through the wall of the respective hollow bodies of the valve and/or sleeve.

By the term "available opening area" it is here meant an area of at least one aperture of the hollow valve body which is covered or blocked by the movable spool in a certain position and uncovered or open when the movable spool is moved.

By the term "bleed" it is here meant at least one valve aperture configured to empty or to run off the damping fluid from the first chamber of the hollow valve body.

By the term "bleed rate" it is here meant the flow of damping fluid exiting the hollow valve body through the bleed aperture.

The present inventive concept is hereby advantageous in that the adjustable valve may be implemented in any shock absorber both for the compression circuit and/or for the rebound circuit. Additionally, the hollow valve body and the plurality of apertures comprised on the hollow valve body enable damping fluid connectivity between the hollow valve body itself and the outside of the adjustable valve. This damping fluid connectivity is further controlled via the rotatable sleeve, arranged around at least part of the hollow valve body, and the plurality of sleeve apertures comprised on the rotatable sleeve. The control and adjustment of the damping parameters of the shock absorber is therefore obtained through the rotation of the sleeve around the hollow valve body which permits the variation of the alignment between at least one valve aperture and at least one sleeve aperture. The present inventive concept is further advantageous in that the movable spool is configured to divide the hollow valve body into a first chamber and a second chamber enabling each chamber to provide specific adjustment of the damping parameters of the shock absorber. The first chamber and the at least one valve aperture aligned with said first chamber fulfills the function of a bleed. In other words, the at least one valve aperture comprised in the portion of the hollow valve body corresponding to the first chamber provides a constant damping fluid connectivity between the first chamber and the outside of the hollow valve body. It will be appreciated that this constant damping fluid connectivity between the first chamber and the outside of the hollow valve body is controlled by the rotatable sleeve and the sleeve apertures comprised thereon. The bleed function of the first chamber is advantageous in that it enables the adjustable valve to increase the slope of the damping curve of the shock absorber by increasing its damping rate, resulting in low-speed damping for the shock absorber. Moreover, the second chamber and the at least one valve aperture aligned with said second chamber enable the movement of the movable spool along the hollow valve body upon a pressure exerted on said movable spool. The movement of the movable spool in turn permits the variation of an available opening of the hollow valve body aligned with the first chamber, i.e. comprised in the portion of the hollow valve body corresponding to the first chamber. The movement of the movable spool is advantageous in that it enables the adjustable valve to decrease the slope of the damping curve of the shock absorber by decreasing its damping rate, in turn resulting in high-speed damping for the shock absorber. Furthermore, the adjustable valve is advantageous in that the rotatable sleeve provides an additional means of adjustment of the damping parameters of the shock absorber through the variation of the alignment of the sleeve apertures with the valve apertures. In other words, the variation of the alignment between at least a sleeve aperture and a valve aperture varies the area through which the hollow valve body is fluidly connected with the outside of the adjustable valve. The rotatable sleeve therefore provides a control over the bleed function of the first chamber of the hollow valve body and over the movement of the movable spool enabled by the second chamber of the hollow valve body. The adjustable valve is therefore advantageous in that the combination of the bleed function, the movable spool and the rotatable sleeve increase the adjustment capacity of the damping parameters of the shock absorber. The aforementioned combination further increases the variety of possible adjustments of the damping parameters and the range of said adjustments. Additionally, the time required for making an adjustment of the damping parameters is greatly reduced by the combination of the bleed function, the movable spool and the sleeve therefore reducing the stress and load applied on the components of the adjustable valve during an adjustment. It will be appreciated of the rotatable sleeve may be configured to be rotated to pre-established positions relative to the hollow valve body, for example representing various pre-established modes of the shock absorber ( e.g. decent mode, trail mode, race mode, etc.). It will further be appreciated that the rotation of the rotatable sleeve may be configured to be rotated gradually relative to the hollow valve body throughout its rotation range, enabling more specific and accurate adjustments of the damping parameters of the shock absorber. Moreover, the adjustable valve of the present inventive concept is advantageous in that it has a simple construction comprising very few components or parts which decreases the complexity of its maintenance and repair in addition to limiting the total weight of the shock absorber.

According to some embodiments of the present inventive concept, the movable spool may comprise a hollow body comprising an opened end and a closed end, wherein a volume of the hollow body of the movable spool may form part of the second chamber of the hollow valve body. The hollow body of the movable spool and its opened end are advantageous in that they enable a larger volume of damping fluid to be comprised in the second chamber. Furthermore, the hollow body of the movable spool reduces its weight which facilitates its movement within the hollow valve body and enables the movable spool to be more responsive to pressure variation in the first chamber thus improving the rapidity with which high-speed damping may be achieved. The hollow body of the movable spool is further advantageous in that it reduces the total weight of the adjustable valve.

According to some embodiments of the present inventive concept, the adjustable valve may further comprise a spring arranged within the second chamber, wherein the spring may comprise a first end abutting the hollow body of the movable spool and a second end abutting the hollow valve body. Moreover, the spring may be configured to exert a force against the hollow body of the movable spool along a central longitudinal axis of the hollow valve body. By the term "central longitudinal axis" it is here meant the axis along which the hollow valve body elongates. The hollow body of the movable spool is advantageous in that it allows the spring to be at least partially housed within it, resulting in the first end of the spring abutting the interior surface of the closed end of the movable spool. The position of the spring at least partially within the hollow body of the movable spool permits a better containment of the spring thus preventing undesired bending or torsion of the spring. Moreover, the abutment of the first end and second end of the spring with the movable spool and with the hollow valve body, respectively, prevents displacement of the spring along the central longitudinal axis. In other words, the spring may be compressed along the central longitudinal axis as a result of the movement of the movable spool along the same axis but the spring as a component may not translate along the central longitudinal axis. Furthermore, the abutment of the first end and second end of the spring allows the spring to continuously be at least partially compressed within the second chamber such that it constantly exerts a force on the hollow body of the movable spool in the direction of the first chamber. The force exerted by the spring on the movable spool therefore provides a certain resilience to the movement of the movable spool which must be overpowered by the pressure of damping fluid in the first chamber in order to generate the movement of the movable spool.

According to some embodiments of the present inventive concept, each sleeve aperture of the plurality of sleeve apertures may be configured to be at least partially aligned with at least one valve aperture of the plurality of valve apertures along the central longitudinal axis of the hollow valve body. The at least partial alignment of sleeve apertures with valve apertures along the central longitudinal axis enables the variation of the circumferential alignment between at least one sleeve aperture and at least one valve aperture upon rotation of the rotatable sleeve relative to the hollow valve body. The at least partial alignment of the sleeve apertures and the valve apertures along the central longitudinal axis therefore permits the control and adjustment of the damping fluid connectivity between the first and second chambers of the hollow valve body and the outside of the adjustable valve through the rotation of the sleeve relative to the hollow valve body.

According to some embodiments of the present inventive concept, the plurality of valve apertures may comprise at least one primary aperture, wherein the at least one primary aperture may comprise an area aligned with the first chamber of the hollow valve body along the central longitudinal axis. Moreover, upon rotation of the sleeve relative to the hollow valve body, the variation of the alignment between at least one sleeve aperture of the plurality of sleeve apertures and the at least one primary aperture may be configured to vary a common area between the at least one sleeve aperture of the plurality of sleeve apertures and the at least one primary aperture. The at least one primary aperture and its area aligned with the first chamber of the hollow valve body enables the bleed function of the first chamber. In other words, the at least one primary aperture permits damping fluid connectivity between the first chamber of the hollow valve body and the outside of the adjustable valve. This damping fluid connectivity is further controlled by the rotation of the rotatable sleeve which permits the adjustment of the common area between the at least one primary aperture and the at least one sleeve aperture through which damping fluid may exit the first chamber, i.e. the common area performing the bleed function. In other words, the rotation of the sleeve varies the superimposition of at least one sleeve aperture and the at least one primary aperture, resulting in the variation of the area available for the damping fluid to bleed or exit from the first chamber of the hollow valve body. The reduction of this common area upon rotation of the sleeve relative to the hollow valve body results in the reduction of the bleed rate, favoring a low-speed damping adjustment. In contrast, the increase of the common area upon rotation of the sleeve relative to the hollow valve body results in the increase of the bleed rate, favorable to the movement of the movable spool, thus favoring a high-speed damping adjustment.

According to some embodiments of the present inventive concept, the plurality of valve apertures may further comprise at least one secondary aperture, wherein the at least one secondary aperture comprises an area aligned with the second chamber of the hollow valve body along the central longitudinal axis. Moreover, upon rotation of the sleeve relative to the hollow valve body, the variation of the alignment between at least one sleeve aperture of the plurality of sleeve apertures and the at least one secondary aperture may be configured to vary a common area between the at least one sleeve aperture of the plurality of sleeve apertures and the at least one secondary aperture. The at least one secondary aperture and its area aligned with the second chamber of the hollow valve body enables the movement of the movable spool within the hollow valve body by allowing damping fluid to exit the second chamber. In other words, the at least one secondary aperture permits damping fluid connectivity between the second chamber of the hollow valve body and outside of the adjustable valve. This damping fluid connectivity is further controlled by the rotation of the rotatable sleeve relative to the hollow valve body, which varies the superimposition of at least one sleeve aperture and the at least one secondary aperture. The variation of the superimposition/ alignment results in the variation of the area available for the damping fluid to exit from the second chamber of the hollow valve body. The reduction of this common area increases the resistance provided against the movement of the movable spool within the hollow valve body in addition to the resistance provided by the spring. Therefore, the reduction of the common area between the at least one secondary aperture and at least one sleeve aperture increases the damping rate of the shock absorber thus favoring a low-speed damping adjustment. On the other hand, the increase of the common area between the at least one secondary aperture and at least one sleeve aperture results in an easier movement of the movable spool and therefore in a reduction of the damping rate of the shock absorber favoring a high-speed damping adjustment. It will be appreciated that upon rotation of the sleeve relative to the hollow valve body, the common area between the at least one sleeve aperture and the at least one secondary aperture may be reduced such that it is non-existent. In other words, upon sufficient rotation of the sleeve relative to the hollow valve body, the at least one sleeve aperture and the at least one secondary aperture become misaligned such that the no common area between the at least one sleeve aperture and the at least one secondary aperture is available for damping fluid connectivity between the second chamber of the hollow valve body and the outside of the adjustable valve. As a result, the movement of the movable spool within the hollow valve body is prevented in turn resulting in a much higher damping rate of the shock absorber.

According to some embodiments of the present inventive concept, the plurality of valve apertures may further comprise at least one auxiliary aperture, wherein the at least one auxiliary aperture may comprise an available opening area aligned with the first chamber of the hollow valve body along the central longitudinal axis. The dimensions of the at least one auxiliary aperture may be adapted to the desired application for which the adjustable valve and the shock absorber comprising it are used. For example, for an application in which a higher rate of high-speed damping is required (e.g. high-performance motorcycles), the dimensions of the at least one auxiliary aperture should be larger than for an application requiring a lesser rater of high-speed damping (e.g. mountain biking).

According to some embodiments of the present inventive concept, the movable spool may further comprise at least one guiding surface configured to engage the at least one auxiliary aperture. Moreover, the at least one guiding surface may be configured to guide the movement of the movable spool along the central longitudinal axis of the hollow valve body, and wherein the at least one guiding surface may be configured to seal the first chamber from the second chamber. The at least one guiding surface enables the movable spool to remain perfectly aligned with the central longitudinal axis of the hollow valve body when moving. The at least one guiding surface therefore prevents wear and tear of the movable spool potentially caused by the movement of a movable spool misaligned with the central longitudinal axis of the hollow body. Moreover, the sealing function of the at least one guiding surface prevents any damping fluid connectivity between the first chamber and the second chamber which permits each chamber and their respectively aligned apertures to provide more accurate adjustment of the damping parameters of the shock absorber. Furthermore, the sealing function of the at least one guiding surface minimizes undesired pressure drops between the first and second chambers of the hollow valve body, in turn enabling more precise adjustment of the damping parameters of the shock absorber.

According to some embodiments of the present inventive concept, the movable spool may be configured to gradually transition between a closed position in which the hollow body of the movable spool blocks the available opening area of the at least one auxiliary aperture and an opened position in which the hollow body of the movable spool at least partially unblocks the available opening area of the at least one auxiliary aperture. The variation of the available opening area relative to the movement of the movable spool between the opened and the closed position permits the variation of the damping rate of the shock absorber and enables high-speed damping adjustment of the shock absorber. In other words, the movement of the movable spool is proportional to the unblocked portion of the available opening area which enabling damping fluid to exit the first chamber therethrough.

According to some embodiments of the present inventive concept, upon rotation of the sleeve relative to the hollow valve body, the variation of the alignment between at least one sleeve aperture of the plurality of sleeve apertures and the at least one auxiliary aperture may be configured to vary a common area between the at least one sleeve aperture of the plurality of sleeve apertures and the available opening area of the at least one auxiliary aperture. The rotatable sleeve therefore provides an additional degree of control over the adjustment of the damping parameters, more specifically the high-speed damping adjustment. In other words, the variation of the common area between the at least one sleeve aperture and the available opening area of the at least one auxiliary aperture provides control over the damping fluid connectivity between the first chamber of the hollow valve body and the outside of the adjustable valve via the available opening area which affects the high-speed damping adjustment of said shock absorber.

According to some embodiments of the present inventive concept, the movable spool may be configured to move in response to a pressure difference between the first chamber and the second chamber and upon at least partial alignment between at least one sleeve aperture of the plurality of sleeve apertures and the at least one secondary aperture. The at least partial alignment between the at least one sleeve aperture and the at least one secondary aperture allows movement of the movable spool to occur by enabling damping fluid connectivity between the second chamber of the hollow valve body and the outside of the adjustable valve. Furthermore, the movement of the movable spool occurs when the pressure of damping fluid in the first chamber is superior to the pressure of damping fluid in the second chamber and to the resilience of the spring arranged within the second chamber.

According to some embodiments of the present inventive concept, wherein the rotatable sleeve may be configured to be rotated by means of an electrical actuator. The electrical actuator may be connected to the rotatable sleeve by means of a shaft positioned at the closed end of the rotatable sleeve. It will be appreciated that the electrical actuator may be a stepper motor, a BLDC motor, a brushless motor, a Servo motor, etc.

According to some embodiments of the present inventive concept there is provided a shock absorber for a suspension of a vehicle, wherein the shock absorber may comprise at least one adjustable valve as described above. The adjustable valve may be configured to adjust the damping of the shock absorber and may comprise a hollow valve body wherein the hollow valve body comprises a plurality of valve apertures. The adjustable vale of the shock absorber may further comprise a rotatable sleeve rotatably arranged around at least part of the hollow valve body, wherein the rotatable sleeve comprises a plurality of sleeve apertures. Additionally, the adjustable valve of the shock absorber may comprise a movable spool slidably arranged within the hollow valve body and configured to move relative to the hollow valve body. The movable spool may be configured to divide the hollow valve body into a first chamber and second chamber and rotation of the rotatable sleeve relative to the hollow valve body may be configured to vary an alignment between at least one sleeve aperture of the plurality of sleeve apertures and at least one valve aperture of the plurality of valve apertures. Moreover, movement of the movable spool relative to the hollow valve body is configured to vary an available opening area of at least one valve aperture of the plurality of valve apertures. It will be appreciated that the at least one adjustable valve is preceded by a check valve such that the damping fluid may only enter the first chamber of the hollow valve body via a singular inlet of damping fluid.

According to some embodiments of the present inventive concept, at least one adjustable valve may be configured to adjust the damping of the shock absorber in a compression stroke and at least one adjustable valve may configured to adjust the damping of the shock absorber in a rebound stroke. The provision of having at least one adjustable valve for adjusting the damping parameters of the compression stroke enables the possibility of high-speed compression damping adjustments and low-speed compression damping adjustments. Similarly, the provision of having a different at least one adjustable valve for adjusting the damping parameters of the rebound stroke enables the possibility of high-speed rebound damping adjustments and low-speed rebound damping adjustments.

According to some embodiments of the present inventive concept, the shock absorber comprising the at least one adjustable valve may be a front shock absorber. Furthermore, the shock absorber comprising the at least one adjustable valve may be a rear shock absorber.

Further objectives of, features of, and advantages with, the present invention will become apparent when studying the following detailed disclosure, the drawings and the appended claims. Those skilled in the art will realize that different features of the present invention can be combined to create embodiments other than those described in the following.

### BRIEF DESCRIPTION OF THE DRAWINGS

This and other aspects of the present invention will now be described in more detail, with reference to the appended drawings showing embodiment(s) of the inventive concept.
Fig. 1 schematically shows an exploded view of an adjustable valve according to an exemplifying embodiment of the present inventive concept,
Fig. 2a schematically shows a cross-sectional view of an adjustable valve,
   wherein the movable spool is in a closed position according to an exemplifying embodiment of the present inventive concept,
Fig. 2b schematically shows a cross-sectional view of an adjustable valve,
   wherein the movable spool is in an opened position according to an exemplifying embodiment of the present inventive concept,
Figs. 3a-3d schematically illustrate various configurations of the rotatable sleeve relative to the hollow valve body corresponding to various adjustments of the damping parameters of a shock absorber comprising the adjustable valve according to an exemplifying embodiment of the present inventive concept, and
Fig. 4 schematically illustrates an adjustable valve actuated by means of an electrical actuator according to an exemplifying embodiment of the present inventive concept.

### DETAILED DESCRIPTION

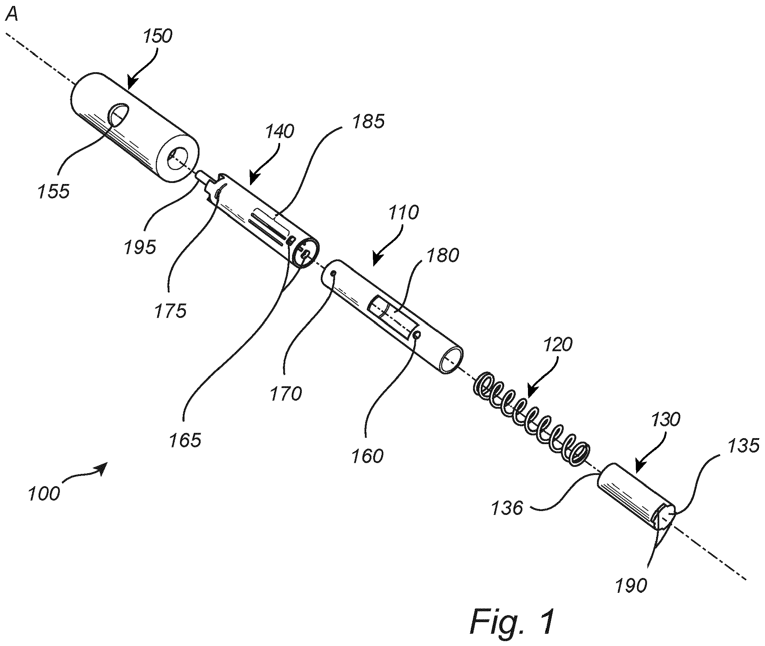

Fig. 1 schematically shows an exploded view of an adjustable valve 100 according to an exemplifying embodiment of the present inventive concept. The adjustable valve 100 is shown formed of a hollow valve body 110 comprising a plurality of valve apertures of which the primary valve aperture 160, the secondary valve aperture 170 and the auxiliary valve aperture 180 are visible. It will be appreciated that the hollow valve body 110 comprises symmetrically positioned valve apertures its opposite side which is not visible in Fig. 1. The primary valve aperture 160 and the secondary valve aperture 170 are shown having circular dimensions with the primary valve aperture 160 having a larger area than the secondary valve aperture 170. Moreover, Fig. 1 illustrates the auxiliary aperture 180 corresponding to an available opening area varied by the movement of the movable spool 130 when the adjustable valve 100 is assembled. It will be apricated that the primary valve aperture 160, the secondary valve aperture 170 and the auxiliary aperture 180 may embody different dimensions and shapes from what is shown in Fig. 1, preferably conserving a similar dimension ratio relative to one another as shown in Fig. 1. The adjustable valve 100 is further shown formed of a rotatable sleeve 140 comprising a plurality of sleeve apertures 165, 175, 185 which are configured to be aligned with the primary aperture 160, the secondary aperture 170 and the auxiliary aperture 180 of the hollow valve body 110 respectively, along the central longitudinal axis, A, when the adjustable valve 100 is assembled. Fig. 1 further illustrates the sleeve apertures 165 (visible on either side of the rotatable sleeve 140 in Fig. 1) having a substantially rectangular shape and having an area slightly larger than the area of the primary aperture 160 of the hollow valve body 110. The sleeve aperture 175 is shown in Fig. 1 having a substantially rectangular shape and having an area varying along its elongation such that the area of at least a portion of the sleeve aperture 175 is slightly larger than the area of the secondary aperture 170 and an the area of at least a portion of the sleeve aperture 175 is slightly smaller than the area of the secondary aperture 170. The sleeve apertures 185 are illustrated in Fig. 1 as parallel slits elongating along the central longitudinal axis, A, with a length similar to the length of the length of the auxiliary aperture 180 of the hollow valve body 110 but comprising an area substantially smaller than the opening area of the auxiliary aperture 180. It will be appreciated that the rotatable sleeve 140 comprises sleeve apertures which are not visible in Fig. 1, but which are positioned on the opposite side of the rotatable sleeve 140 symmetrically to the sleeve apertures 175 and 185. It will further be apricated that the plurality of sleeve apertures 165, 175, 185 may embody different dimensions and shapes from what is shown in Fig. 1 but preferably conserve a similar dimension ratio relative to one another and relative to the primary aperture 160, secondary aperture 170 and auxiliary aperture 180 with which they are configured to be aligned once the valve 100 is assembled. Furthermore, Fig. 1 shows the adjustable valve 100 formed of the movable spool 130 and of a spring 120 wherein the movable spool 130 comprises guiding surfaces 190 on either side of its closed end 135. The adjustable valve 100 is further shown formed of a housing 150 comprising a plurality of housing apertures 155 (only one of which is shown in Fig. 1) which fluidly connects the adjustable valve 100 to the rest of the shock absorber. The components forming the adjustable valve 100 are further shown aligned and elongated along the central longitudinal axis, A, and upon assembly of the adjustable valve 100 the spring 120 is at least partially inserted into the hollow body of the movable spool 130 via its opened end 136. The spring 120 and the movable spool 130 are both configured to be inserted within the hollow valve body 110 such that the guiding surfaces 190 of the movable spool 130 engage with the auxiliary aperture 180 and guide and limit the movement of the movable spool 130 within the hollow valve body 110. Upon assembly of the adjustable valve 100, the rotatable sleeve 140 is further arranged at least partially around the hollow valve body 110 and all the above assembled components are then arranged within the housing 150 such that shaft 195 extends out of the end portion of the housing 150 for a user to actuate the rotation of the sleeve 140.

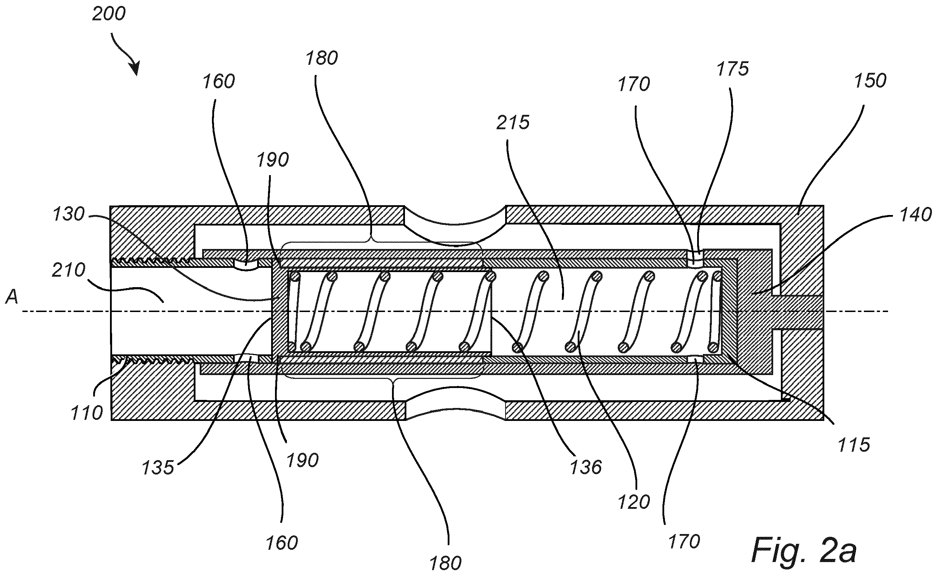

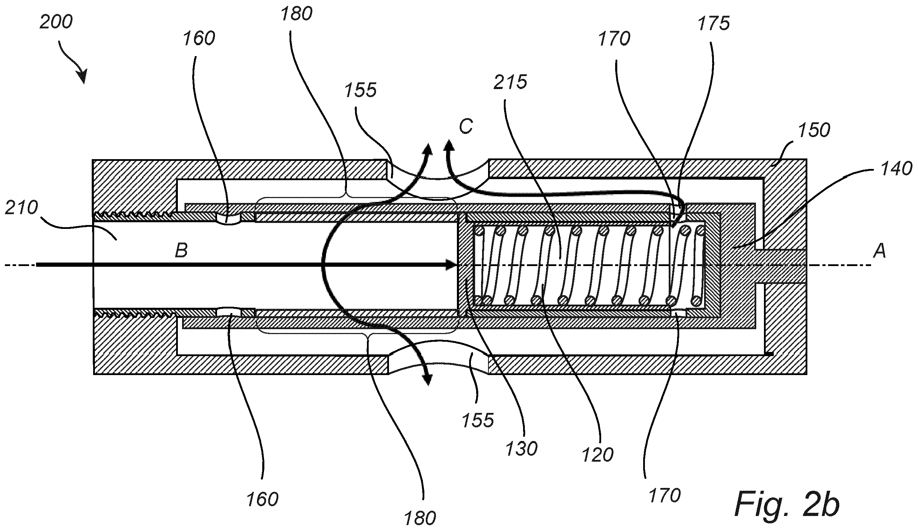

Fig. 2a schematically shows a cross-sectional view of an adjustable valve 200, wherein the movable spool 130 is in a closed position and wherein the cross-sectional view is taken along the central longitudinal axis, A. Fig. 2a illustrates the adjustable valve 200, representing an assembled version of the adjustable valve 100 of Fig. 1, wherein the hollow valve body 110 is shown inserted within the housing 150 and screwed to said housing 150 at one end by means of threading comprised on both the hollow valve body 110 and on the housing 150. Fig. 2a further illustrates the rotatable sleeve 140 arranged around at least part of the hollow valve body 110 and the movable spool 130 arranged within the hollow valve body 110. It will be appreciated that the inner wall of the rotatable sleeve 140 is in contact with the outer surface of the hollow valve body 110 such that no damping fluid may get lodged or accumulated between the hollow valve body 110 and the rotatable sleeve 140. It will further be appreciated that the above-described contact does not generate resistance to the rotation of the rotatable sleeve 140 relative to the hollow valve body 110. Additionally, the movable spool 130 is further shown having a hollow body within which the spring 120 is at least partially inserted via the opened end 136 of the movable spool 130. The spring 120 is shown having a first end abutting the hollow body of the movable spool 130 at its closed end 135 and a second end abutting the hollow valve body 110 at its closed end 115, such that the spring 120 exerts a force against the hollow body of the movable spool 130 along a central longitudinal axis, A. Moreover, Fig. 2a illustrates the guiding surfaces 190 of the movable spool 130 engaged in the auxiliary aperture 180. Fig. 2a further shows the movable spool 130 dividing the hollow valve body 110 into a first chamber 210 and a second chamber 215 wherein the volume of the hollow body of the movable spool 130 forms part of the second chamber 215 and wherein the guiding surfaces 190 seal the first chamber 210 from the second chamber 215. Additionally, Fig. 2a depicts the primary apertures 160 aligned with the first chamber 210 and the secondary apertures 170 aligned with the second chamber 215 along the central longitudinal axis, A. Fig. 2a further shows the rotatable sleeve 140 positioned relative to the hollow valve body 110 such that the primary apertures 160, i.e. the bleed apertures, are misaligned with any sleeve apertures and no common area between the primary apertures 160 and any sleeve apertures is available for bleeding damping fluid from the first chamber 210. Moreover, Fig. 2a shows the sleeve aperture 175 aligned with one of the secondary apertures 170 such that they share a common area enabling damping fluid to exit the second chamber 215 upon movement of the movable spool 130. Fig. 2a further depicts the movable spool 130 in its closed position in which the hollow body of the movable spool 130 completely blocks the auxiliary apertures 180 and its available opening area. The configuration of the adjustable valve 200 shown in Fig. 2a is such that upon damping fluid pressure in the first chamber 210 being superior to the damping fluid pressure and to the resilience of the spring 120 in the second chamber 215, the movable spool 130 will move along the central longitudinal axis, A, such that the volume of the first chamber 210 becomes larger than the volume of the second chamber 215 as shown in Fig. 2b.

Fig. 2b schematically shows a cross-sectional view of the adjustable valve 200, wherein the movable spool 130 is in an opened position and wherein the cross-sectional view is taken along the central longitudinal axis, A. Fig. 2b illustrates the movable spool 130 completely unblocking the auxiliary apertures 180 such that the available opening areas of the auxiliary apertures 180 are fully uncovered. It will be appreciated that, in Fig. 2a and Fig. 2b, the rotatable sleeve 140 is rotated relative to the hollow valve body 110 such that at least one sleeve aperture is aligned with the auxiliary apertures 180 along the central longitudinal axis, A, and shares a common area with the auxiliary apertures 180. It is to be noted that such common area between the at least one sleeve aperture and the auxiliary apertures 180 is not clearly visible in Fig. 2a and Fig. 2b due to the cross-sectional view. Moreover, in its opened position the movable spool 130 is shown compressing the spring 120 such that the volume of the first chamber 210 of the hollow valve body 110 is superior to the volume of the second chamber 215 of the hollow valve body 110. Fig. 2b further illustrates the damping fluid connectivity between the first chamber 210 of the hollow valve body 110 and the outside of the adjustable valve 200 by the directional arrow B. The directional arrow, B, illustrates the damping fluid entering the hollow valve body 110 at the opened end of the adjustable valve 200, i.e. during the compression stroke and/or the rebound stroke of the shock absorber, and generating sufficient pressure in the first chamber 210 such that the movable spool 130 transitions from the closed position (illustrated in Fig. 2a) to the opened positioned (illustrated here in Fig. 2b). The directional arrow B further shows the damping fluid connectivity between the first chamber 210 and the outside of the adjustable valve 200 being enabled via the available opening of the auxiliary apertures 180 and via the housing apertures 155. Furthermore, the damping fluid connectivity between the second chamber 215 of the hollow valve body 110 and the outside of the adjustable valve 200 is depicted by the directional arrow, C. The fluid connectivity depicted by the directional arrow, C, is enabled by the common area between of the sleeve aperture 175 and the secondary aperture 170 and by the housing aperture 155. In the exemplifying embodiment illustrated in Fig. 2b, the bleed function of the primary apertures 160 is disabled due to the misalignment between the primary apertures 160 and any of the sleeve apertures and the opened position of the movable spool 130 depicts a high-speed damping adjustment of the damping parameters of the shock absorber.

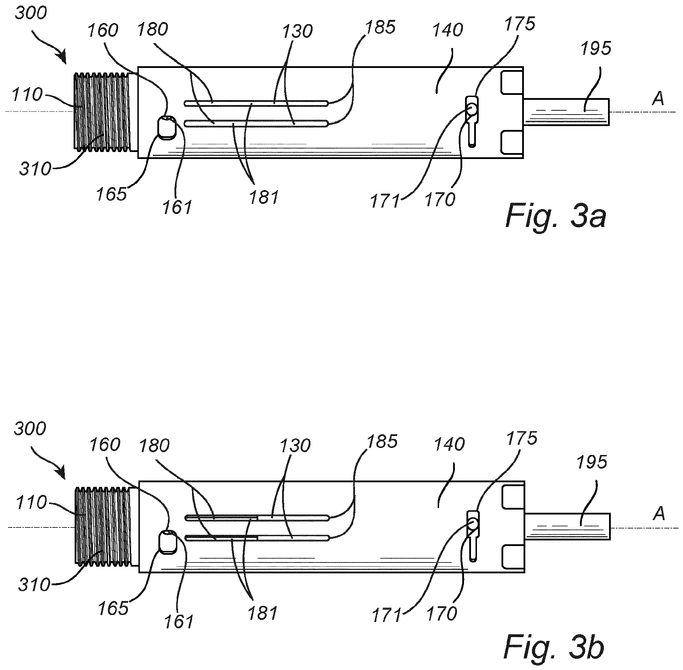

Fig. 3a to Fig. 3d schematically illustrate various configurations of the rotatable sleeve relative to the hollow valve body corresponding to various adjustments of the damping parameters of a shock absorber comprising the adjustable valve 300. Fig. 3a shows the rotatable sleeve 140 rotated relative to the hollow valve body 110 to form a possible configuration wherein the alignment the sleeve aperture 165 and the primary aperture 160 form the common area 161. The common area 161 enables the bleed function of the first chamber of the hollow valve body. Fig. 3a further illustrate a configuration in which the alignment the sleeve aperture 175 and the secondary aperture 170 form the common area 171. The common area 171 enables fluid connectivity between the second chamber of the hollow valve body and the outside of the adjustable valve 300. Additionally, the configuration shown in Fig. 3a depicts a complete alignment of the auxiliary apertures 180 of the hollow valve body 110 and the sleeve apertures 185 of the rotatable sleeve 140 thus forming the common area 181. Fig. 3a further shows the movable spool 130 in the closed position therefore fully blocking the available opening area of the auxiliary apertures 180. Furthermore, in the configuration shown in Fig. 3a only a small common area 161 between the primary aperture 160 and the sleeve aperture 165 is enabled, i.e. only a small bleed rate is enabled for the first chamber of the hollow valve body 110, which results in higher damping rate. The configuration of Fig. 3a therefore adjusts the damping parameters of the shock absorber for applications requiring low velocity of movement of the piston of the shock absorber and provides low-speed damping adjustment.

Fig. 3b illustrates the adjustable valve 300 having the same configuration as shown in Fig. 3a regarding the alignments and common areas between the valve apertures, 160, 170, 180 and the sleeve apertures 165, 175, 185. However, Fig. 3b shows the movable spool 130 moved along the hollow valve body 110 to a position between its closed position and its opened position. The position of the movable spool 130 shown in Fig. 3b partially unblocks the available opening area of the auxiliary apertures 180 thus enabling fluid connectivity between the first chamber of the hollow valve body 110 and the outside of the adjustable valve 300 in addition the common area/bleed 161. The movement of the movable spool 130 shown in Fig. 3b is observed when a higher flow of damping fluid enters the adjustable valve 300, for example due to faster compression of the shock absorber, and enables high-speed damping adjustment of the shock absorber. Furthermore, the full alignment between the secondary aperture 170 and the sleeve aperture 175 enables the largest possible common area for fluid connectivity between the second chamber of the hollow valve body and the outside of the adjustable valve 300, which results in low damping of the movement of the movable spool 130, i.e. the lowest possible resistance to the movement of the movable spool 130.

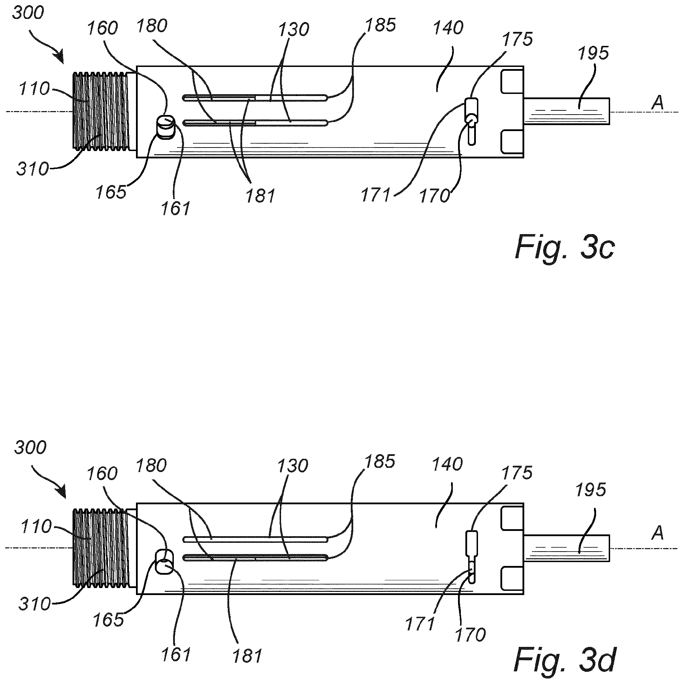

Fig. 3c illustrates a configuration of the adjustable valve 300, obtained from the configurations shown in Figs. 3a-3b, by the clockwise rotation of the rotatable sleeve 140 relative to the hollow valve body 110 around the central longitudinal axis, A. The configuration of Fig. 3c therefore illustrates a larger common area 161 between the primary aperture 160 and the sleeve aperture 165 in comparison to the configuration of Figs. 3a-3b, which enables a greater flow of damping fluid, or greater bleed rate, to exit the first chamber of the hollow valve body 110. This greater bleed rate decreases the damping rate of the shock absorber. The configuration shown in Fig. 3c also depicts a reduction of the common area 171 between the secondary aperture 170 and the sleeve aperture 175 in comparison to the configuration of Figs. 3a-3b, which increases the damping of the movement of the movable spool 130. The configuration of Fig. 3c thus reduces the slope of the damping curve of the high-speed damping curve.

Fig. 3d, illustrates a configuration of the adjustable valve 300, obtained from the configurations shown in Fig. 3c, by the clockwise rotation of the rotatable sleeve 140 relative to the hollow valve body 110 about the central longitudinal axis, A. The configuration of Fig. 3d shows a decreased common area 161 between the primary aperture 160 and the sleeve aperture 165 in comparison to the configuration of Fig. 3c, which reduces the bleed rate and therefore increases the damping rate of the shock absorber. Furthermore, the configuration of Fig. 3d shows only one of the sleeve apertures 185 aligned with the auxiliary aperture 180 therefore reducing the available opening area of the auxiliary aperture 180 unblocked by the movable spool 130. The common area 171 between the secondary aperture 170 and the sleeve aperture 175 is further shown decreased in comparison to the configuration of Fig. 3c, which increases the damping of the movement of the movable spool 130. The configuration shown in Fig. 3d therefore provides high-speed damping adjustments of the shock absorber with a higher slope of the damping curve compared to the configuration shown in Fig. 3c. In addition, it will be appreciated that each of Figs. 3a-3d illustrate the threading 310 of the hollow valve body permitting said hollow valve body to be removable attached to the housing of the adjustable valve. Moreover, each of Figs. 3a-3d further illustrate the shaft 195 of the rotatable sleeve 140 permitting the user to rotate the rotatable sleeve 140 and operate the adjustable valve 300.

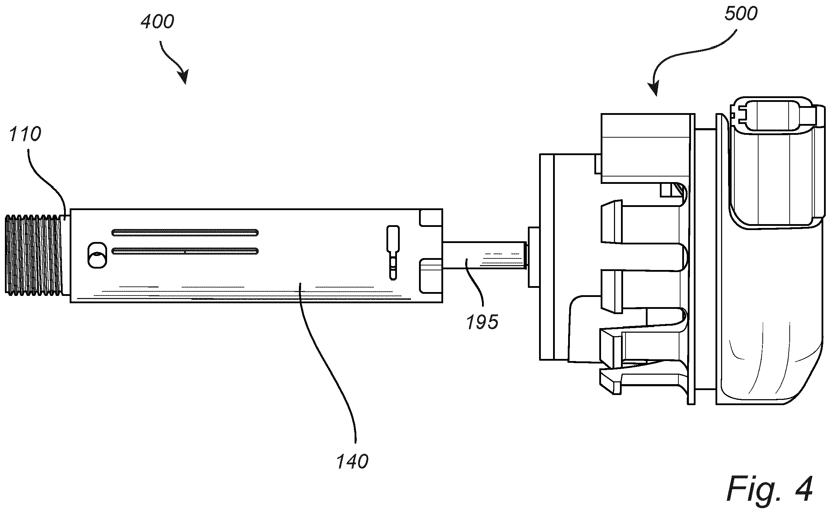

Fig. 4 schematically illustrates an adjustable valve 400 actuated by means of an electrical actuator 500. Fig. 4 shows the adjustable valve 400 without its housing, wherein the shaft 195 of the rotatable sleeve 140 is being rotated relative to the hollow valve body 110 by an electrical actuator 500, in this case a stepper motor 500.

The person skilled in the art realizes that the present invention by no means is limited to the preferred embodiments described above. On the contrary, many modifications and variations are possible within the scope of the appended claims. For example, the shape, dimensions and orientation of any of the valve aperture and/or sleeve apertures may differ from the ones described in relation to the above embodiments.

### ITEMIZED LIST OF EMBODIMENTS

1. An adjustable valve (100, 200, 300, 400) for a shock absorber, the adjustable valve comprises:
   a hollow valve body (110) wherein the hollow valve body comprises a plurality of valve apertures (160, 170, 180);
   a rotatable sleeve (140) rotatably arranged around at least part of the hollow valve body, wherein the rotatable sleeve comprises a plurality of sleeve apertures (165, 175, 185);
   a movable spool (130) slidably arranged within the hollow valve body and configured to move relative to the hollow valve body;
      wherein the movable spool is configured to divide the hollow valve body into a first chamber (210) and second chamber (215);
      wherein rotation of the rotatable sleeve relative to the hollow valve body is configured to vary an alignment between at least one sleeve aperture of the plurality of sleeve apertures and at least one valve aperture of the plurality of valve apertures; and
      wherein movement of the movable spool relative to the hollow valve body is configured to vary an available opening area of at least one valve aperture of the plurality of valve apertures.
2. The adjustable valve according to claim 1, wherein the movable spool further comprises a hollow body comprising an opened end (136) and a closed end (135), wherein a volume of the hollow body of the movable spool forms part of the second chamber of the hollow valve body.
3. The adjustable valve according to claim 2, further comprising a spring (120) arranged within the second chamber, wherein the spring comprises a first end abutting the hollow body of the movable spool and a second end abutting the hollow valve body and wherein the spring is configured to exert a force against the hollow body of the movable spool along a central longitudinal axis, A, of the hollow valve body.
4. The adjustable valve according to claim 3, wherein each sleeve aperture of the plurality of sleeve apertures is configured to be at least partially aligned with at least one valve aperture of the plurality of valve apertures along the central longitudinal axis of the hollow valve body.
5. The adjustable valve according to any of the preceding claims, wherein the plurality of valve apertures comprises at least one primary aperture (160), wherein the at least one primary aperture comprises an area aligned with the first chamber of the hollow valve body along the central longitudinal axis.
6. The adjustable valve according to claim 5, wherein, upon rotation of the sleeve relative to the hollow valve body, the variation of the alignment between at least one sleeve aperture (165) of the plurality of sleeve apertures and the at least one primary aperture is configured to vary a common area (161) between the at least one sleeve aperture of the plurality of sleeve apertures and the at least one primary aperture.
7. The adjustable valve according to any of the preceding claims, wherein the plurality of valve apertures further comprises at least one secondary aperture (175), wherein the at least one secondary aperture comprises an area aligned with the second chamber of the hollow valve body along the central longitudinal axis.
8. The adjustable valve according to claim 7, wherein, upon rotation of the sleeve relative to the hollow valve body, the variation of the alignment between at least one sleeve aperture (175) of the plurality of sleeve apertures and the at least one secondary aperture is configured to vary a common area (171) between the at least one sleeve aperture of the plurality of sleeve apertures and the at least one secondary aperture.
9. The adjustable valve according to any of the preceding claims, wherein the plurality of valve apertures further comprises at least one auxiliary aperture (180), wherein the at least one auxiliary aperture comprises an available opening area aligned with the first chamber of the hollow valve body along the central longitudinal axis.
10. The adjustable valve according to claim 9, wherein the movable spool further comprises at least one guiding surface (190) configured to engage the at least one auxiliary aperture.
11. The adjustable valve according to claim 10, wherein the at least one guiding surface is configured to guide the movement of the movable spool along the central longitudinal axis of the hollow valve body, and wherein the at least one guiding surface is configured to seal the first chamber from the second chamber.
12. The adjustable valve according to any of the preceding claims, wherein the movable spool is configured to gradually transition between a closed position in which the hollow body of the movable spool blocks the available opening area of the at least one auxiliary aperture and an opened position in which the hollow body of the movable spool at least partially unblocks the available opening area of the at least one auxiliary aperture.
13. The adjustable valve according to claim 12, wherein, upon rotation of the sleeve relative to the hollow valve body, the variation of the alignment between at least one sleeve aperture (185) of the plurality of sleeve apertures and the at least one auxiliary aperture is configured to vary a common area (181) between the at least one sleeve aperture of the plurality of sleeve apertures and the available open area of the at least one auxiliary aperture.
14. The adjustable valve according to claim 1, wherein the movable spool is configured to move in response to a pressure difference between the first chamber and the second chamber and upon at least partial alignment between at least one sleeve aperture of the plurality of sleeve apertures and the at least one secondary aperture.
15. The adjustable valve according to any of the preceding claims, wherein the rotatable sleeve is configured to be rotated by means of an electrical actuator (500).
16. A shock absorber for a suspension of a vehicle, wherein the shock absorber comprises at least one adjustable valve configured to adjust the damping of the shock absorber, the adjustable valve comprising:
   a hollow valve body wherein the hollow valve body comprises a plurality of valve apertures;
   a rotatable sleeve rotatably arranged around at least part of the hollow valve body, wherein the rotatable sleeve comprises a plurality of sleeve apertures;
   a movable spool slidably arranged within the hollow valve body and configured to move relative to the hollow valve body;
      wherein the movable spool is configured to divide the hollow valve body into a first chamber and second chamber;
      wherein rotation of the rotatable sleeve relative to the hollow valve body is configured to vary an alignment between at least one sleeve aperture of the plurality of sleeve apertures and at least one valve aperture of the plurality of valve apertures;
      wherein movement of the movable spool relative to the hollow valve body is configured to vary an available opening area of at least one valve aperture of the plurality of valve apertures.
17. The shock absorber according to claim 16, wherein at least one adjustable valve is configured to adjust the damping of the shock absorber in a compression stroke.
18. The shock absorber according to claim 16, wherein at least one adjustable valve is configured to adjust the damping of the shock absorber in a rebound stroke.
19. The shock absorber according to claim 16, wherein said shock absorber is a front shock absorber.
20. The shock absorber according to claim 16, wherein said shock absorber is a rear shock absorber.

## Claims

1. An adjustable valve (100, 200, 300, 400) for a shock absorber, the adjustable valve comprises:
a hollow valve body (110) wherein the hollow valve body comprises a plurality of valve apertures (160, 170, 180);
a rotatable sleeve (140) rotatably arranged around at least part of the hollow valve body, wherein the rotatable sleeve comprises a plurality of sleeve apertures (165, 175, 185);
a movable spool (130) slidably arranged within the hollow valve body and configured to move relative to the hollow valve body;
wherein the movable spool is configured to divide the hollow valve body into a first chamber (210) and second chamber (215);
wherein rotation of the rotatable sleeve relative to the hollow valve body is configured to vary an alignment between at least one sleeve aperture of the plurality of sleeve apertures and at least one valve aperture of the plurality of valve apertures; and
wherein movement of the movable spool relative to the hollow valve body is configured to vary an available opening area of at least one valve aperture of the plurality of valve apertures.

2. The adjustable valve according to claim 1, wherein the movable spool further comprises a hollow body comprising an opened end (136) and a closed end (135), wherein a volume of the hollow body of the movable spool forms part of the second chamber of the hollow valve body.

3. The adjustable valve according to claim 2, further comprising a spring (120) arranged within the second chamber, wherein the spring comprises a first end abutting the hollow body of the movable spool and a second end abutting the hollow valve body and wherein the spring is configured to exert a force against the hollow body of the movable spool along a central longitudinal axis, A, of the hollow valve body.

4. The adjustable valve according to claim 3, wherein each sleeve aperture of the plurality of sleeve apertures is configured to be at least partially aligned with at least one valve aperture of the plurality of valve apertures along the central longitudinal axis of the hollow valve body.

5. The adjustable valve according to any of the preceding claims, wherein the plurality of valve apertures comprises at least one primary aperture (160), wherein the at least one primary aperture comprises an area aligned with the first chamber of the hollow valve body along the central longitudinal axis.

6. The adjustable valve according to claim 5, wherein, upon rotation of the sleeve relative to the hollow valve body, the variation of the alignment between at least one sleeve aperture (165) of the plurality of sleeve apertures and the at least one primary aperture is configured to vary a common area (161) between the at least one sleeve aperture of the plurality of sleeve apertures and the at least one primary aperture.

7. The adjustable valve according to any of the preceding claims, wherein the plurality of valve apertures further comprises at least one secondary aperture (175), wherein the at least one secondary aperture comprises an area aligned with the second chamber of the hollow valve body along the central longitudinal axis.

8. The adjustable valve according to claim 7, wherein, upon rotation of the sleeve relative to the hollow valve body, the variation of the alignment between at least one sleeve aperture (175) of the plurality of sleeve apertures and the at least one secondary aperture is configured to vary a common area (171) between the at least one sleeve aperture of the plurality of sleeve apertures and the at least one secondary aperture.

9. The adjustable valve according to any of the preceding claims, wherein the plurality of valve apertures further comprises at least one auxiliary aperture (180), wherein the at least one auxiliary aperture comprises an available opening area aligned with the first chamber of the hollow valve body along the central longitudinal axis.

10. The adjustable valve according to claim 9, wherein the movable spool further comprises at least one guiding surface (190) configured to engage the at least one auxiliary aperture.

11. The adjustable valve according to claim 10, wherein the at least one guiding surface is configured to guide the movement of the movable spool along the central longitudinal axis of the hollow valve body, and wherein the at least one guiding surface is configured to seal the first chamber from the second chamber.

12. The adjustable valve according to any of the preceding claims, wherein the movable spool is configured to gradually transition between a closed position in which the hollow body of the movable spool blocks the available opening area of the at least one auxiliary aperture and an opened position in which the hollow body of the movable spool at least partially unblocks the available opening area of the at least one auxiliary aperture.

13. The adjustable valve according to claim 12, wherein, upon rotation of the sleeve relative to the hollow valve body, the variation of the alignment between at least one sleeve aperture (185) of the plurality of sleeve apertures and the at least one auxiliary aperture is configured to vary a common area (181) between the at least one sleeve aperture of the plurality of sleeve apertures and the available open area of the at least one auxiliary aperture.

14. The adjustable valve according to claim 1, wherein the movable spool is configured to move in response to a pressure difference between the first chamber and the second chamber and upon at least partial alignment between at least one sleeve aperture of the plurality of sleeve apertures and the at least one secondary aperture.

15. The adjustable valve according to any of the preceding claims, wherein the rotatable sleeve is configured to be rotated by means of an electrical actuator (500).
